(19) Europäisches Patentamt
European Patent Office
Office européen des brevets

(11) **EP 2 179 529 B1**

(12) **FASCICULE DE BREVET EUROPEEN**

(45) Date de publication et mention de la délivrance du brevet:
**04.12.2019 Bulletin 2019/49**

(21) Numéro de dépôt: **08826767.9**

(22) Date de dépôt: **18.07.2008**

(51) Int Cl.:
*H04L 5/02* (2006.01)    *H04L 27/26* (2006.01)

(86) Numéro de dépôt international:
**PCT/FR2008/051362**

(87) Numéro de publication internationale:
**WO 2009/016306 (05.02.2009 Gazette 2009/06)**

(54) **METHODE DE SEPARATION DE SOURCES DANS UN SYSTEME MULTISOURCES**

VERFAHREN ZUR TRENNUNG VON QUELLEN IN EINEM MEHRQUELLENSYSTEM

METHOD OF SEPARATING SOURCES IN A MULTISOURCE SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.07.2007 FR 0756661**

(43) Date de publication de la demande:
**28.04.2010 Bulletin 2010/17**

(73) Titulaire: **Orange**
**75015 Paris (FR)**

(72) Inventeurs:
• **ALAMAYREH, Ahmad**
  **F-22300 Lannion (FR)**
• **LE MASSON, Jérôme**
  **F-22300 Lannion (FR)**

(56) Documents cités:
**EP-A- 1 124 348**      **WO-A-2007/042424**
**US-A1- 2006 039 451**

• ZTE: "BCH Location in E-UTRA Downlink", 3GPP DRAFT; R1-062550 BCH LOCATION IN E-UTRA DOWNLINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103067, [retrieved on 2006-10-04]
• FUJITSU: "Initial cell search procedure and long-CP sub-frame structure", 3GPP DRAFT; R1-060970, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20060321, 21 March 2006 (2006-03-21), XP050101873, [retrieved on 2006-03-21]

EP 2 179 529 B1

## Description

L'invention se situe dans le domaine des télécommunications, et plus particulièrement dans le domaine des techniques de transmission numérique de données telles que les transmissions xDSL (pour *Digital Subscriber Line,* ou ligne numérique d'abonné en français) ou radio ou communications par courants porteurs. De telles techniques peuvent utiliser des modulations mono-porteuse ou multi-porteuse de type OFDM (pour *Orthogonal Frequency Division Multiplexing,* ou multiplexage par division de fréquence orthogonale) ou DMT (pour Discrete *MultiTone,* ou multitonalité discrète en français).

Dans un tel réseau ou système dans la suite du document, un ensemble de dispositifs d'émission/réception communiquent entre eux en partageant un même canal de transmission. Ces dispositifs sont répartis en deux groupes : un premier groupe constituant un point central et un deuxième groupe dit utilisateurs. Dans un tel système, chaque dispositif d'émission/réception constitutif du point central reçoit les signaux de données émis par tous les dispositifs d'émission/réception utilisateurs et vice versa, même si ces signaux ne lui sont pas destinés. Pour identifier les différents signaux de données reçus par un dispositif d'émission/réception il est nécessaire de les séparer afin, par exemple, de déterminer la réponse du canal de transmission établi entre un premier et un deuxième dispositif d'émission/réception. On entend par réponse du canal, une fonction représentant, par exemple, l'atténuation du canal. Un exemple d'un tel réseau peut être un réseau d'accès, ou un réseau local.

Dans un système tel que celui décrit ci-dessus, dans le sens descendant, le dispositif d'émission/réception d'un utilisateur final donné reçoit l'ensemble des signaux de données émis par un ou plusieurs dispositifs d'émission/réception constitutifs d'un nœud central même si un seul de ces signaux de données lui est effectivement destiné. De même, dans le sens montant, un dispositif d'émission/réception disposé au nœud central reçoit l'ensemble des signaux de données émis par un ou plusieurs des différents dispositifs d'émission/réception d'utilisateurs finaux.

Ceci a pour conséquence que le signal de données reçu par le dispositif d'émission/réception d'un utilisateur final contient non seulement le signal de données qui lui est destiné mais également les signaux de données émis dans le même sens par les autres dispositifs d'émission/réception du nœud central de manière plus ou moins atténuée mais cependant perceptible selon que la communication entre les différents dispositifs d'émission/réception est filaire ou non filaire, telle qu'une communication radio. Ces signaux de données parasites sont source d'interférences qui perturbent la réception du signal de données destiné au dispositif d'émission/réception.

Afin de corriger les effets dus à ces interférences, il est nécessaire de connaître la réponse fréquentielle ou temporelle des différents canaux du système.

Cependant, il est difficile d'avoir accès à ces données notamment lors de la mise en place d'une nouvelle liaison ou lors de la suppression d'une liaison existante ou encore lors d'une réinitialisation du système. Une telle difficulté tient au fait que chaque dispositif d'émission/réception aussi bien au niveau du nœud central qu'au niveau des dispositifs d'émission/réception des utilisateurs finaux, reçoit une pluralité de signaux de données.

Il est alors difficile de connaître, par exemple, la réponse fréquentielle de la nouvelle liaison puisqu'il est impossible d'identifier parmi la pluralité de signaux de données reçus le signal de données véhiculé par la nouvelle liaison.

Dans un article intitulé "Blind Channel Identification and Equalization in OFDM-Based Multiantenna Systems", Bölcskei et al., IEEE Transactions on Signal Processing, Vol. 50, No. 1 January 2002, il est décrit une méthode permettant de séparer les signaux de données véhiculés par les différentes liaisons constitutives du système. Une telle méthode est mise en œuvre en deux temps : dans un premier temps au niveau d'un dispositif d'émission/réception agissant en tant qu'émetteur, et dans un deuxième temps au niveau d'un dispositif d'émission/réception agissant en tant que récepteur. Cette méthode est une méthode d'identification aveugle.

Afin de séparer les signaux de données reçus et ainsi identifier les différentes liaisons constitutives du système la méthode décrite dans cet article consiste à modifier la périodicité cyclostationnaire des signaux de données véhiculés par les liaisons du système.

Une telle méthode d'identification aveugle consiste à appliquer aux données à émettre un algorithme de précodage dont la fonction est de modifier la périodicité cyclostationnaire des signaux de données. Les séquences de précodage appliquées aux données à émettre sont différentes pour chaque signal de données. Ainsi chaque signal de données présente, après émission, une périodicité cyclostationnaire qui lui est propre.

La séparation des différents signaux de données est réalisée au niveau du dispositif d'émission/réception agissant en tant que récepteur par application d'une fonction d'autocorrélation cyclique. Une telle fonction est une fonction statistique d'ordre deux qui lors de son application à un ou plusieurs signaux de données fait apparaître des effets de source qui sont liés à la périodicité cyclostationnaire des signaux de données auxquels elle est appliquée. En modifiant la périodicité cyclostationnaire des signaux de données, l'apparition de ces effets de sources est contrôlée et il devient possible de séparer les différents signaux de données reçus par un dispositif d'émission/réception.

Une telle méthode d'identification aveugle bien que permettant de séparer efficacement les différents signaux de données reçus présente l'inconvénient d'être de mise en oeuvre lourde.

En effet, cette méthode nécessite la mise en oeuvre de moyens de génération des séquences de précodage à appliquer aux différents signaux de données. La génération de ces séquences de précodage nécessite une puissance de calcul et une capacité de mémorisation accrue ce qui induit par conséquent une modification de structure des dispositifs d'émission/réception agissant en tant qu'émetteurs des signaux de données. De plus, une telle méthode introduit une modification de la structure des données liée à l'application des séquences de précodage aux données. Cette modification de la structure des données entraine également une modification du dispositif d'émission/réception agissant en tant que récepteur qui doit être capable de décoder les données reçues afin de les exploiter.

Toutes ces modifications entraînent une augmentation du coût des équipements mis en place dans les réseaux de télécommunication. Ainsi, il existe un besoin d'une solution qui permette de séparer les différents signaux de données reçus par un même dispositif démission/réception en vue de corriger les effets liés au phénomène d'interférences, et qui n'entraine pas une augmentation du coût des équipements réseau.

L'invention répond à ce besoin d'une solution de séparation des différents signaux de données reçus par un même dispositif d'émission/réception en vue de corriger les effets liés au phénomène d'interférences, n'entraînant pas une augmentation du coût des équipements réseau. Le document WO 2007/042424 A2 (TELEFONAKTIEBOLAGET LM ERICSSON) publié le 19 Avril 2007 décrit l'estimation de la longueur d'un préfixe cyclique en utilisant une fonction de corrélation.

L'invention est définie par les revendications. Dans la suite de la description, les modes de réalisation qui ne sont pas couverts par les revendications doivent être interprétés comme des exemples utiles pour comprendre l'invention. Ainsi, l'invention concerne un procédé d'émission d'au moins un premier et un deuxième signal de données, lesdites données étant découpées en blocs de données de taille fixe comprenant un champ d'entête de taille prédéterminée, lesdits signaux de données étant émis à destination d'au moins un dispositif de traitement de données apte à appliquer une fonction d'autocorrélation cyclique de paramètre k permettant d'identifier les premier et deuxième signaux de données.

Un tel procédé est particulier en ce que la valeur du paramètre k est fonction d'un rapport entre la taille desdits blocs de données et la taille prédéterminée du champ d'entête, en outre, le procédé comprend une étape de modification de la taille du champ d'entête desdits blocs de données avant l'émission dudit premier signal de données, la valeur du paramètre k et la taille desdits blocs de données restant inchangées.

En modifiant la taille des champs d'entête des blocs de données véhiculés par l'un des signaux émis à destination du dispositif de réception, la périodicité cyclostationnaire de ce signal de données s'en trouve modifiée. La modification du comportement périodique de ce signal permet de le séparer des autres signaux de données reçus par le dispositif de réception pour lesquels la taille des champs d'entête des blocs de données qu'ils véhiculent n'est pas modifiée.

Ce champ d'entête est appelé un préfixe cyclique. Le préfixe cyclique permet d'éviter le chevauchement des données appartenant à deux blocs de données générés consécutivement. Le fait que le préfixe cyclique soit constitué d'une redondance des données contenues dans un bloc de données, est à l'origine de la périodicité cyclostationnaire des signaux de données.

En modifiant la taille du préfixe cyclique des blocs de données, le comportement périodique du signal de données est modifié sans que les données à transmettre aient elles-mêmes été altérées ou modifiées.

La modification, pour l'un des signaux reçu par le dispositif de réception, de la taille du préfixe cyclique des blocs de données véhiculées permet de contrôler l'apparition d'effets de source lors de l'application de la fonction d'autocorrélation cyclique. L'apparition de ces effets de source permet de séparer les différents signaux de données reçus.

En séparant ainsi les différents signaux de données reçus par le dispositif de réception, il est possible de simplifier les traitements à appliquer aux signaux de données afin de corriger les bruits d'interférence qui entrainent une baisse du débit des données et qui perturbent la réception de celles-ci par le dispositif de réception.

Une telle solution est de mise en oeuvre simple. En effet, le procédé objet de l'invention ne nécessite pas de codage supplémentaire des données véhiculées par les signaux de données puisqu'il suffit de modifier la taille du préfixe cyclique des blocs de données à émettre. Ainsi, un tel procédé est applicable aux systèmes de transmission existants et déjà mis en œuvre dans les réseaux de télécommunication.

L'invention concerne également un procédé de traitement de données véhiculées par au moins deux signaux de données, lesdites données étant découpées en blocs de données de taille fixe comprenant un champ d'entête de taille prédéterminée, ledit procédé comprenant une étape d'identification d'au moins un desdits signaux de données par application d'une fonction d'autocorrélation cyclique de paramètre k de valeur fixe.

Un tel procédé est particulier en ce que la valeur du paramètre k est fonction d'un rapport entre la taille desdits blocs de données et la taille prédéterminée du champ d'entête, et en ce que la fonction d'autocorrélation cyclique est appliquée à des signaux de données dont la taille du champ d'entête des blocs de données de l'un au moins desdits signaux de données est distincte de ladite taille prédéterminée du champ d'entête, la valeur du paramètre k et la taille des blocs de données étant inchangées.

Pour séparer plusieurs signaux de données reçus, le dispositif de traitement des données applique une fonction d'autocorrélation cyclique. Lors de l'application de la fonction d'autocorrélation cyclique, des effets de source, liés au caractère périodique des signaux de données reçus par le dispositif de traitement de données, apparaissent. En contrôlant l'apparition de ces effets de sources, il est possible de séparer les différents signaux de données.

Dans le procédé objet de l'invention, le contrôle de l'apparition des effets de source se fait en modifiant la taille du champ d'entête, ou préfixe cyclique, des blocs de données véhiculés par l'un au moins des signaux de données reçus par le dispositif de traitement de données.

En effet, pour un signal de données donné, il est connu que si la valeur du paramètre k est égale à un multiple entier du rapport entre la taille des blocs de données et la taille du préfixe cyclique de ces blocs de données, pour le signal de données en question, le résultat de l'application de la fonction d'autocorrélation cyclique à ce signal de données est une valeur nulle.

En fixant la valeur du paramètre k égale à un multiple entier du rapport entre la taille des blocs de données avant modification et la taille du préfixe cyclique avant modification, le résultat de l'application de la fonction d'autocorrélation cyclique aux signaux de données pour lesquels la taille du préfixe cyclique des blocs de données n'a pas été modifiée avant l'émission du signal est une valeur nulle. Le signal de données pour lequel le résultat de l'application de la fonction d'autocorrélation cyclique est une valeur non nulle est le signal de données pour lequel la taille du préfixe cyclique des blocs de données a été modifiée avant son émission.

Selon une caractéristique du procédé de traitement objet de l'invention, celui-ci comprend, pour ledit signal de données identifié, une étape de suppression dudit champ d'entête.

Dans le procédé de traitement de données objet de l'invention, les données ne nécessitent pas l'application de traitement supplémentaire tel qu'un décodage lié à l'application d'une séquence de précodage aux données avant leur émission.

Ici, une fois le préfixe cyclique supprimé, les données peuvent être traitées directement.

L'invention concerne également un dispositif d'émission d'au moins un premier et un deuxième signal de données, lesdites données étant découpées en blocs de données de taille fixe comprenant un champ d'entête de taille prédéterminée, lesdits signaux de données étant émis à destination d'au moins un dispositif de traitement de données conçu pour appliquer une fonction d'autocorrélation cyclique de paramètre k de valeur fixe permettant d'identifier les premier et deuxième signaux de données.

Un tel dispositif est particulier en ce que la valeur du paramètre k est fonction d'un rapport entre la taille desdits blocs de données et la taille prédéterminée du champ d'entête, de plus, ce dispositif d'émission comporte des moyens de modification de la taille du champ d'entête desdits blocs de données avant l'émission dudit premier signal de données, la valeur du paramètre k et la taille desdits blocs de données restant inchangées.

L'invention concerne aussi un dispositif de traitement de données véhiculées par au moins deux signaux de données, lesdites données étant découpées en blocs de données de taille fixe comprenant un champ d'entête de taille prédéterminée, ledit dispositif comprenant des moyens d'application d'une fonction d'autocorrélation cyclique de paramètre k de valeur fixe.

Un tel dispositif est particulier en ce que la valeur du paramètre k est fonction d'un rapport entre la taille desdits blocs de données et la taille prédéterminée du champ d'entête, et en ce que lesdits moyens d'application sont adaptés pour appliquer ladite fonction d'autocorrélation cyclique à des signaux de données dont la taille du champ d'entête des blocs de données de l'un au moins desdits signaux de données est distincte de ladite taille prédéterminée du champ d'entête, la valeur du paramètre k et la taille des blocs de données étant inchangées.

Selon une particularité du dispositif de traitement de données objet de l'invention, celui-ci comprend des moyens de suppression dudit champ d'entête dans le signal de données identifié.

L'invention concerne enfin un signal composite comprenant au moins un premier et un deuxième signal de données, ledit signal composite étant destiné à être transmis entre au moins un dispositif d'émission et au moins un dispositif de traitement des données reliés entre eux par un réseau de communication, lesdits premier et deuxième signaux de données compris dans le signal composite étant porteurs de données découpées en blocs de données de taille fixe comprenant un champ d'entête de taille prédéterminée, ledit dispositif de réception étant conçu pour appliquer une fonction d'autocorrélation cyclique de paramètre k de valeur fixe permettant d'identifier lesdits premier et deuxième signaux de données.

Un tel signal est particulier en ce que la valeur du paramètre k est fonction d'un rapport entre la taille desdits blocs de données et la taille prédéterminée du champ d'entête, et en ce qu'au moins l'un des premier et deuxième signaux de données compris dans ledit signal composite véhicule des blocs de données dont la taille du champ d'entête est distincte de la taille prédéterminée du champ d'entête, la valeur du paramètre k et la taille desdits blocs de données restant inchangées.

D'autres caractéristiques et avantages apparaîtront à la lecture de modes de réalisation préférés décrits en référence aux dessins dans lesquels :

- la figure 1A représente un système de télécommunication dans lequel une nouvelle paire de modem est activée et dans lequel le procédé d'émission objet de l'invention est mis en œuvre au niveau du central téléphonique,

- la figure 1B représente le même système de télécommunication dans lequel le procédé d'émission objet de l'invention est mis en œuvre dans les N-1 dispositifs d'émission/réception appartenant aux utilisateurs finaux,

- la figure 2A représente un bloc de données véhiculé par les signaux de données,

- la figure 2B représente un bloc de données dont la taille des champs le constituant a été modifiée avant émission,

- la figure 3 représente les étapes constitutives du procédé d'émission objet de l'invention,

- la figure 4 représente les étapes constitutives du procédé de traitement des données objet de l'invention,

- la figure 5A montre une représentation graphique d'une fonction d'autocorrélation cyclique appliquée à un signal de données pour lesquels le rapport M/L n'est pas un multiple de 5,

- la figure 5B montre une représentation graphique d'une fonction d'autocorrélation cyclique appliquée à un signal de données pour lequel le rapport M/L est un multiple,

- la figure 6 représente un dispositif d'émission/réception apte à mettre en œuvre les procédés d'émission et de traitement des données objets de l'invention,

- la figure 7 représente un système de télécommunication dans lequel une nouvelle antenne est activée et dans lequel la solution objet de l'invention est mise en oeuvre.

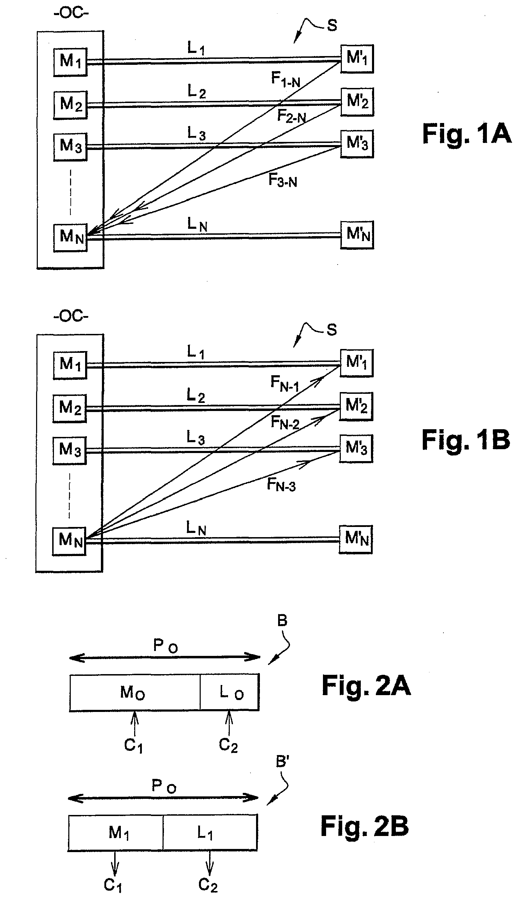

La figure 1A représente un système de communication S dans lequel les procédés d'émission et de traitement de données objets de l'invention sont mis en œuvre. Un tel système comprend un central téléphonique OC comprenant N-1 dispositifs d'émission/réception $D_i$, $i \in \{1, ..., N-1\}$. De tels dispositifs sont par exemples des modems xDSL. Chaque modem $D_i$ disposés au niveau du central téléphonique OC est connecté au moyen d'une liaison $L_i$ à un dispositif d'émission/réception $D'_i$ appartenant à un utilisateur final.

Lorsque, dans un premier mode de réalisation de l'invention, les dispositifs d'émission/réception $D_i$ disposés au central téléphonique sont des modems xDSL, les dispositifs d'émission/réception $D'_i$ sont, eux aussi, des modems xDSL. La liaison $L_i$ connectant le modem $D_i$ disposé au central téléphonique au modem $D'_i$ correspondant est une liaison xDSL, c'est-à-dire une liaison permettant le transfert de données modulées selon la technique xDSL. Une telle liaison $L_i$ est par exemple une ligne de cuivre appartenant à un câble.

Dans un système S tel que celui décrit en référence à la figure 1A, chaque liaison $L_i$ véhicule un signal contenant des données soit dans le sens remontant, c'est-à-dire depuis un modem $D'_i$ appartenant à un utilisateur final vers un modem $D_i$ correspondant disposé au niveau du central téléphonique, soit dans le sens descendant, c'est-à-dire depuis un modem $D_i$ disposé au niveau du central téléphonique vers un modem $D'_i$ appartenant à un utilisateur final.

Lorsque plusieurs de ces signaux de données sont transmis dans un même sens, remontant ou descendant, un phénomène de couplage électromagnétique, ou diaphonie, intervient entre les différentes liaisons du système S donnant naissance à des interférences. Ces interférences sont représentées, pour le sens remontant, sur la figure 1A par les différentes flèches $F_{i/N}$, où $F_{i/N}$ représente les interférences dues au signal données de la liaison i sur le signal utile de la liaison N. Concernant le sens descendant, les interférences sont représentées, sur la figure 1B, par les différentes flèches $F_{N/i}$, où $F_{N/i}$ représente les interférences dues au signal données de la liaison N sur le signal utile de la liaison i. Les éléments constitutifs du système S communs au mode de réalisation déjà décrits en référence à la figure 1A portent les mêmes références et ne sont pas décrits de nouveau.

Le phénomène de diaphonie a pour conséquence que le signal de données reçu par un modem $D_i$, $D'_i$ disposé en extrémité d'une liaison est un signal composite comprenant non seulement le signal de données qui est destiné au modem $D_i$, $D'_i$ mais également les signaux de données émis dans le même sens sur les autres liaisons de manière atténuée mais cependant perceptible. De tels signaux sont appelés signaux diaphoniques.

La présence de ces signaux diaphoniques perturbe la réception, par les modems $D_i$, $D'_i$, des signaux de données qui leurs sont destinés de sorte qu'il est nécessaire d'appliquer un traitement aux signaux de données transmis afin de prendre en compte les interférences entre les liaisons et ainsi permettre d'améliorer les performances de la transmission.

Lors de l'activation dans le système S d'une nouvelle paire de modem $D_N$, $D'_N$, il est nécessaire de procéder à une estimation des effets des interférences existant entre les liaisons $L_i$ du système S et la nouvelle liaison $L_N$ et des effets des interférences existant entre la nouvelle liaison $L_N$ et les liaisons $L_i$ du système S et ce dans les deux sens de transmission, descendant et remontant et ce pour chacun des modem $D_N$, $D'_N$.

Afin de pouvoir procéder à une telle estimation des effets des interférences liés à l'activation de la nouvelle liaison $L_N$, il est intéressant d'isoler, sur chacune des liaisons $L_i$, le signal émis par le modem $D_N$ disposé au niveau du central téléphonique, puis sur la liaison $L_N$, d'isoler dans le signal composite véhiculé, les signaux émis par les différents modems appartenant à des usagers finaux.

Il faut, ensuite, faire de même pour le modem $D'_N$ appartenant à un usager final. La méthode appliquée étant identique, elle ne sera décrite que pour le premier cas de figure.

En référence à la figure 2A, les données véhiculées par les signaux de données émis par les différents modems $D_i$, $D'_i$ sont découpées en blocs de données B de taille $P_0$. Chacun de ces blocs de données B comprend au moins deux champs $C_1$ et $C_2$. Le champ $C_1$ contient les données à émettre, il est de taille $M_0$. Le champ $C_2$, de taille $L_0$, contient une copie des $L_0$ dernières données comprises dans le champ $C_1$. Le champ $C_2$ permet d'éviter l'apparition d'interférences entre deux blocs de données B émis successivement. Ce champ $C_2$ est appelé préfixe cyclique.

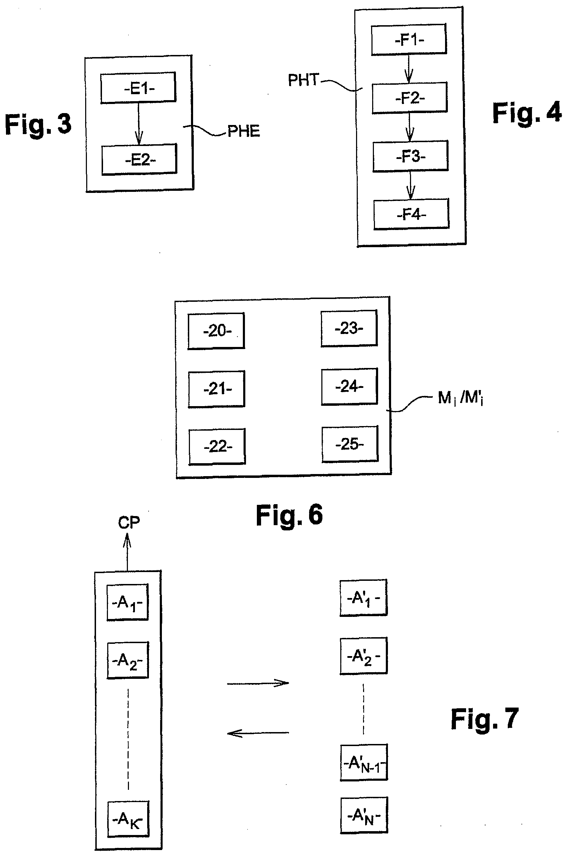

Dans le sens descendant, le procédé d'émission objet de l'invention, dont les étapes sont représentées à la figure 3, est mis en oeuvre par le modem $D_N$ disposé au niveau du central téléphonique OC.

Au cours d'une première étape E1, la taille des champs $C_1$ et $C_2$ des blocs de données véhiculés par le signal de données émis par le modem $D_N$ est modifiée alors que la taille $P_0$ des blocs de données reste identique. Dans un tel bloc de données B', représenté à la figure 2B, le champ $C_1$ de taille $M_1$ contient les données à émettre, et le champ $C_{21}$ contient une copie d'une partie des données à émettre. L'étape de modification de la taille de ces champs des blocs de données B' consiste à modifier la taille des champs $C_2$ et $C_1$ de chacun des blocs de données B' à émettre sans que la taille $P_0$ des blocs de données B' ne soit modifiée.

Ainsi, le champ $C_2$ d'un bloc de données B' présente une taille $L_1$ distincte de la taille $L_0$ du champ $C_2$ des blocs de données B, alors que les blocs de données B véhiculés par les signaux de données émis par les N-1 autres modems $D_i$ disposés au niveau du central téléphonique OC, présentent la même taille $P_0$ que les blocs de données B'.

La périodicité cyclostationnaire est une propriété statistique d'ordre deux que présentent les signaux de données véhiculés dans les systèmes utilisant les méthodes de transmission DMT ,ou OFDM ou toute autre méthode employant un préfixe cyclique. Une telle propriété des signaux de données est due au fait que le préfixe cyclique $C_2$ contient une copie d'une partie des données contenues dans le champ de données $C_1$ des blocs de données véhiculés par les signaux de données.

La modification de la taille du préfixe cyclique $C_2$ des blocs de données B' induit une modification de la périodicité cyclostationnaire du signal de données émis par le nouveau modem $D_N$ puisqu'une quantité de données distincte fait l'objet d'une redondance.

Au cours d'une étape E2, le modem $D_N$ émet un signal de données véhiculant les blocs de données B'.

L'ensemble des étapes E1 et E2 du procédé d'émission objet de l'invention constitue une phase d'émission PHE.

Toujours dans le sens descendant, le procédé de traitement de données objet de l'invention, dont les étapes sont représentées à la figure 4, est mis en œuvre par chaque modem $D'_i$ appartenant à un utilisateur final.

Au cours d'une première étape F1, le modem $D'_i$ reçoit un signal composite comprenant les signaux de données émis par les N-1 modems $D_i$ disposés au niveau du central téléphonique OC et par le modem $D_N$.

Au cours d'une deuxième étape F2 une fonction d'autocorrélation cyclique r est appliquée au signal composite reçu. Une telle fonction d'autocorrélation cyclique a pour expression :

$$r_y(k,\tau) = \frac{1}{P_0} \sum_{n=0}^{P_0-1} R_y(n,\tau) e^{-\frac{j2\pi k}{P_0}n}$$

où $R_y$ représente la fonction d'autocorrélation du signal reçu par le modem $D'_i$; $k$ est un entier naturel et r un réel ; et $P_0$ est la taille des blocs de données B et B'.

La fonction d'autocorrélation cyclique $r_y(k,\tau)$ est le $k^{\text{ième}}$ coefficient du développement en série de Fourrier de la fonction d'autocorrélation $R_y(n,\tau) = E\{y(n)y(n-\tau)^*\}$, $E\{\}$ représentant l'espérance mathématique.

La fonction d'autocorrélation cyclique $r_y$, de par ses propriétés permet de faire apparaître, lorsqu'elle est appliquée à un ou plusieurs signaux de données, la périodicité cyclostationnaire de ceux-ci. En faisant apparaître le comportement cyclostationnaire d'une superposition de signaux de données auxquels la fonction d'autocorrélation cyclique est appliquée, il est possible d'identifier un ou plusieurs d'entre eux.

Dans le procédé de traitement de données objet de l'invention, le paramètre k est choisi de telle sorte que :

$$k = N\, P_0 / L_0 \qquad (1)$$

où N est un entier naturel.

Lorsque la fonction d'autocorrélation cyclique r ainsi paramétrée est appliquée au signal composite reçu, elle permet d'identifier le signal de données émis par le modem $D_N$.

En effet, lorsque la fonction d'autocorrélation cyclique $r_y$ est appliquée à un signal de données dont la taille des blocs de données qu'il véhicule vaut $P_0$ et la taille du préfixe cyclique vaut $L_0$, le résultat de cette application est une valeur nulle pour k vérifiant (1), la fonction est dite éteinte.

Lorsque la fonction d'autocorrélation cyclique ainsi paramétrée est appliquée à un signal de données dont la taille du préfixe cyclique qu'il véhicule est distincte de $L_0$ pour une même valeur de $P_0$ et de k, le résultat de l'application de la fonction r est une valeur non nulle.

Ainsi, lorsque la valeur du paramètre k répondant à l'équation (1), la fonction d'autocorrélation cyclique r est appliquée au signal composite reçu par le modem $D'_i$ appartenant à un utilisateur final, le seul signal de données pour lequel le résultat de l'application de la fonction d'autocorrélation cyclique r est une valeur non nulle, est le signal de données émis par le nouveau modem $D_N$ et pour lequel la taille des blocs de données qu'il véhicule a été modifiée au cours de l'étape E1 du procédé d'émission objet de l'invention.

Le principe utilisé pour identifier les différents signaux de données constituant le signal composite reçu par le modem agissant en tant que récepteur est de contrôler l'apparition d'effets de source lors de l'application de la fonction d'autocorrélation cyclique. Afin contrôler l'apparition des effets de source, les inventeurs de la présente demande de brevet proposent de modifier le comportement cyclostationnaire du ou des signaux de données à identifier en modifiant la taille des préfixes cycliques véhiculés par ce ou ces signaux de données préalablement à leur émission de sorte que la taille des préfixes cycliques des blocs de données B' soit distincte de la taille des préfixes cycliques des blocs de données B véhiculés par les autres signaux de données.

A l'issue de l'étape F2, il est possible d'estimer la réponse du canal véhiculant le signal de données ainsi identifié.

Une fois le signal de données émis par le modem $D_N$ identifié, au cours d'une étape F3 du procédé de traitement de données, le préfixe cyclique $C_2$ de chaque blocs de données B' est supprimé.

Une fois le préfixe cyclique $C_2$ supprimé, les données contenues dans le champ de données $C_1$ des chacun des blocs de données B' sont traitées.

L'ensemble des étapes F1 à F4 du procédé de traitement de données objet de l'invention constitue une phase de traitement PHT.

Afin d'estimer les effets des interférences dans le sens remontant, il est nécessaire d'isoler dans le signal composite reçu par le modem $D_N$ disposé au niveau du central téléphonique OC, les signaux émis par les N-1 modems $D'_i$ appartenant à des usagers finaux.

A cette fin, chaque modem $D'_i$ appartenant à des usagers finaux met en œuvre la phase d'émission PHE.

Lorsqu'un modem $D'_i$ met en œuvre la phase d'émission PHE, le modem $D_N$ disposé au central téléphonique OC met en œuvre la phase de traitement de données PHT.

Il est procédé de cette manière jusqu'à ce que les N-1 modems $D'_i$ aient mis en œuvre la phase d'émission PHE.

Dans un autre mode de réalisation de l'invention représenté à la figure 7, les dispositifs d'émission/réception sont des antennes radio $A_i$, $A'_j$ qui communiquent entre elles en partageant un même canal de transmission. Dans un tel mode de réalisation, les données transmises sont modulées selon la technique OFDM, ou selon une technique de modulation dite monoporteuse utilisant un préfixe cyclique.

Un tel système comprend un nœud central CP comprenant K antennes $A_i$, i e {1, ..., K}. Les N-1 utilisateurs finaux on chacun une antenne $A'_i$ i e {1, ..., N-1}, K $\neq$ N. Lors de l'activation dans le système S de l'antenne $A'_N$ d'un nouvel utilisateur N, il est nécessaire de procéder à une estimation du canal de transmission assurant la communication entre les différentes antennes $A_i$ du système S et la nouvelle antenne $A'_N$ dans les deux sens de transmission, descendant et remontant et ce pour chacune des antennes $A_i$ disposée au point central et $A'_N$ de l'utilisateur N.

Dans un tel système, chaque antenne $A_i$ du point central reçoit les signaux de données émis par toutes les antennes $A'_j$ des utilisateurs finaux et vice versa, même si ces signaux ne lui sont pas destinés.

Pour identifier au niveau du point central dans le sens remontant le signal de données émis par l'antenne $A'_N$ de l'utilisateur N, celle-ci met en œuvre le procédé d'émission objet de l'invention.

Toujours dans le sens remontant, le procédé de traitement de données objet de l'invention est mis en œuvre par chaque antenne $A'_i$ disposée au point central.

Afin d'estimer les effets des interférences dans le sens descendant, il est nécessaire d'isoler dans le signal composite reçu par l'antenne $A'_N$ de l'utilisateur N, les signaux émis par les K antennes $A_i$ disposées au point central.

A cette fin, chaque antenne $A_i$ disposée au point central met en œuvre la phase d'émission PHE.

Lorsqu'une antenne $A_i$ met en œuvre la phase d'émission PHE, l'antenne $A'_N$ de l'utilisateur N met en œuvre la phase de traitement de données PHT.

Il est procédé de cette manière jusqu'à ce que les K antennes $A_i$ aient mis en œuvre la phase d'émission PHE.

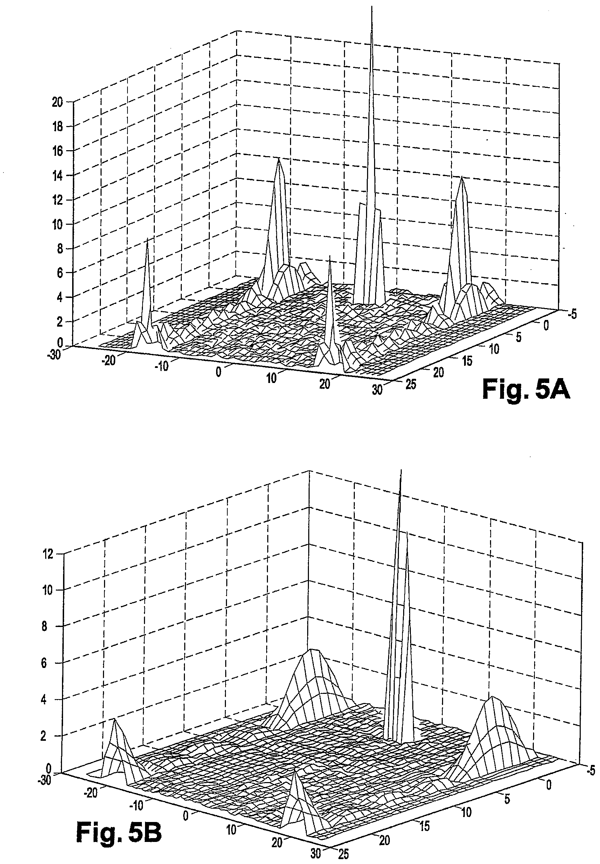

La figure 5A montre une représentation de l'application de la fonction d'autocorrélation cyclique $r_y$ à un signal de données. La taille $P_0$ des blocs de données B véhiculés par ce signal de données vaut 25 et le champ $C_2$ de ce bloc de données est de taille $L_0$ égale à 8.

Dans ce cas de figure, pour une valeur du paramètre k de la fonction d'autocorrélation cyclique $r_y$ égale à 5, le résultat de l'application de la fonction d'autocorrélation cyclique à ce signal de données est une valeur non nulle, k n'étant pas un multiple du rapport $P_0/L_0$,. Il est alors possible d'identifier ce signal de données.

La figure 5B montre une représentation de l'application de la fonction d'autocorrélation cyclique r à un autre signal de données. La taille $P_1$ du bloc de données B' véhiculés par signal de données vaut 25, le champ $C_2$ étant de taille L1 égale à 5.

Dans ce cas de figure, la valeur du paramètre k de la fonction d'autocorrélation cyclique $r_y$ reste inchangée et est égale à 5. Dans cet exemple, la valeur de k est un multiple du rapport $P_0/L_0$, le résultat de l'application de la fonction d'autocorrélation cyclique au signal de données est une valeur nulle, alors que le résultat de l'application de la fonction d'autocorrélation cyclique au signal de données décrit en référence à la figure 5A est un résultat non nul puisque la valeur de k n'est pas un multiple du rapport $P_1/L_1$.

Il est alors possible d'identifier parmi les deux signaux de données reçus, le premier signal de données dont la fonction d'autocorrélation cyclique est représentée figure 5A.

La figure 6 représente un dispositif d'émission/réception $M_i$, $M'_i$ dans lequel les procédés d'émission et de traitement des données objets de l'invention sont mis en œuvre.

Un tel dispositif d'émission/réception $M_i$, $M'_i$ comprend pour mettre en œuvre le procédé d'émission des moyens de modification 20 de la taille des blocs de données véhiculés par le signal de données à émettre, et des moyens d'émission 21 du signal de données.

Pour mettre en œuvre le procédé de traitement de données, le dispositif d'émission/réception $M_i$, $M'_i$ comprend des moyens 22 de réception d'un signal composite, des moyens d'application 23 d'une fonction d'autocorrélation cyclique r, des moyens 24 de suppression du préfixe cyclique $C_2$ des blocs de données véhiculés par le signal de données identifié par application de la fonction d'autocorrélation cyclique r, et enfin des moyens de traitement 25 des données.

Enfin, l'invention a aussi pour objet un programme d'ordinateur, notamment un programme d'ordinateur sur ou dans un support d'informations ou mémoire, adapté à mettre en œuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

**Revendications**

**1.** Procédé de traitement de données véhiculées par un signal composite comprenant un premier et un deuxième signal de données, lesdites données étant découpées en blocs de données (B, B') de taille fixe ($P_0$) comprenant un champ d'entête ($C_2$), ledit procédé comprenant une étape d'identification d'un desdits signaux de données par application d'une fonction d'autocorrélation cyclique de paramètre k de valeur fixe **caractérisé en ce que** la valeur du paramètre k est fonction d'un rapport entre la taille ($P_0$) des blocs de données et une taille prédéterminée ($L_0$) du champ d'entête des blocs de données (B) du premier signal de données, **en ce que** la fonction d'autocorrélation cyclique est appliquée au deuxième signal de données dont la taille ($L_1$) du champ d'entête des blocs de données est distincte de ladite taille prédéterminée ($L_0$) du champ d'entête, la valeur du paramètre k et la taille des blocs de données étant inchangées, **et en ce que** le deuxième signal de données est identifié si l'application de la fonction d'autocorrélation cyclique donne un résultat non nul.

**2.** Procédé de traitement selon la revendication 1, **dans lequel** le procédé comprend, pour ledit signal de données identifié, une étape de suppression dudit champ d'entête ($C_2$).

**3.** Dispositif de traitement de données véhiculées par un signal composite comprenant un premier et un deuxième signal de données, lesdites données étant découpées en blocs de données de taille fixe comprenant un champ d'entête, ledit dispositif comprenant des moyens d'application d'une fonction d'autocorrélation cyclique de paramètre k de valeur fixe, **caractérisé en ce que** la valeur du paramètre k est fonction d'un rapport entre la taille des blocs de données et une taille prédéterminée du champ d'entête des blocs de données du premier signal de données, **en ce que** lesdits moyens d'application sont adaptés pour appliquer ladite fonction d'autocorrélation cyclique au deuxième signal de données dont la taille du champ d'entête des blocs de données est distincte de ladite taille prédéterminée du champ d'entête, la valeur du paramètre k et la taille des blocs de données étant inchangées, **et en ce que** le deuxième signal de données est identifié si l'application de la fonction d'autocorrélation cyclique donne un résultat non nul.

**4.** Dispositif de traitement selon la revendication 3, dans lequel le dispositif comprend des moyens de suppression dudit champ d'entête dans le signal de données identifié.

**5.** Système comportant au moins un dispositif de traitement des données conforme à l'une des revendications 3 à 4, et au moins un dispositif d'émission d'un signal composite comprenant un premier et un deuxième signal de données, lesdites données étant découpées en blocs de données de taille fixe comprenant un champ d'entête de taille prédéterminée, lesdits signaux de données étant émis à destination d'au moins un dispositif de traitement de données conforme à l'une des revendications 3 à 4 conçu pour appliquer une fonction d'autocorrélation cyclique de paramètre k de valeur fixe permettant d'identifier les premier et deuxième signaux de données, **caractérisé en ce que** la valeur du paramètre k est fonction d'un rapport entre la taille desdits blocs de données et la taille prédéterminée du champ d'entête, **et en ce que** ledit dispositif d'émission comporte des moyens de modification de la taille du champ d'entête desdits blocs de données avant l'émission d'un desdits signaux de données, la valeur du paramètre k et la taille desdits blocs de données restant inchangées.

6. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en œuvre du procédé traitement de données selon l'une quelconque des revendications 1 à 2 lorsque ledit programme est exécuté par un ordinateur.

**Patentansprüche**

1. Verfahren zur Verarbeitung von Daten, die mit einem zusammengesetzten Signal übertragen werden, das ein erstes und ein zweites Datensignal umfasst, wobei die Daten in Datenblöcke (B, B') mit fester Größe ($P_0$), die ein Header-Feld ($C_2$) umfassen, gesplittet sind, wobei das Verfahren einen Schritt der Identifizierung eines der Datensignale durch Anwenden einer zyklischen Autokorrelationsfunktion mit dem Festwertparameter k umfasst, **dadurch gekennzeichnet, dass** der Wert des Parameters k von einem Verhältnis zwischen der Größe ($P_0$) der Datenblöcke und einer vorbestimmten Größe ($L_0$) des Header-Feldes der Datenblöcke (B) des ersten Datensignals abhängig ist, **dadurch, dass** die zyklische Autokorrelationsfunktion auf das zweite Datensignal angewandt wird, bei dem die Größe ($L_1$) des Headerfeldes des Datenblocks von der vorbestimmten Größe ($L_0$) des Header-Feldes verschieden ist, wobei der Wert des Parameters k und die Größe der Datenblöcke unverändert sind, **und dadurch, dass** das zweite Datensignal identifiziert wird, wenn die Anwendung der zyklischen Autokorrelationsfunktion ein Ergebnis ungleich null ergibt.

2. Verarbeitungsverfahren nach Anspruch 1, **wobei** das Verfahren für das identifizierte Datensignal einen Schritt des Unterdrückens des Header-Feldes ($C_2$) umfasst.

3. Vorrichtung zur Verarbeitung von Daten, die mit einem zusammengesetzten Signal übertragen werden, das ein erstes und ein zweites Datensignal umfasst, wobei die Daten in Datenblöcke mit fester Größe, die ein Header-Feld umfassen, gesplittet sind, wobei die Vorrichtung Mittel zur Anwendung einer zyklischen Autokorrelationsfunktion mit dem Festwertparameter k umfasst, **dadurch gekennzeich-**

**net, dass** der Wert des Parameters k von einem Verhältnis zwischen der Größe der Datenblöcke und einer vorbestimmten Größe des Header-Feldes der Datenblöcke des ersten Datensignals abhängig ist, **dadurch, dass** die Mittel zur Anwendung geeignet sind, die zyklische Autokorrelationsfunktion auf das zweite Datensignal anzuwenden, bei dem die Größe des Header-Feldes des Datenblocks von der vorbestimmten Größe des Header-Feldes verschieden ist, wobei der Wert des Parameters k und die Größe der Datenblöcke unverändert sind, **und dadurch, dass** das zweite Datensignal identifiziert wird, wenn die Anwendung der zyklischen Autokorrelationsfunktion ein Ergebnis ungleich null ergibt.

4. Verarbeitungsvorrichtung nach Anspruch 3, wobei die Vorrichtung Mittel zur Unterdrückung des Header-Feldes im identifizierten Datensignal umfasst.

5. System mit mindestens einer Datenverarbeitungsvorrichtung nach einem der Ansprüche 3 bis 4 und mindestens einer Vorrichtung zum Senden eines zusammengesetzten Signals, das ein erstes und ein zweites Datensignal umfasst, wobei die Daten in Datenblöcke mit fester Größe, die ein Header-Feld von vorbestimmter Größe umfassen, gesplittet sind, wobei die Datensignale an mindestens eine Datenverarbeitungsvorrichtung nach einem der Ansprüche 3 bis 4 gesendet werden, die dazu ausgestaltet ist, eine zyklische Autokorrelationsfunktion mit dem Festwertparameter k anzuwenden, die es ermöglicht, das erste und das zweite Datensignal zu identifizieren, **dadurch gekennzeichnet, dass** der Wert des Parameters k von einem Verhältnis zwischen der Größe der Datenblöcke und der vorbestimmten Größe des Header-Feldes abhängig ist, **und dadurch, dass** die Sendevorrichtung Mittel zum Ändern der Größe des Header-Feldes der Datenblöcke vor dem Senden eines der Datensignale umfasst, wobei der Wert des Parameters k und die Größe der Datenblöcke unverändert bleiben.

6. Computerprogrammprodukt, das von einem Kommunikationsnetzwerk herunterladbar ist und/oder auf einem computerlesbaren Datenträger gespeichert ist und/oder durch einen Mikroprozessor ausführbar ist, **dadurch gekennzeichnet, dass** es Programmcodeanweisungen umfasst, die bei der Ausführung des Programms durch einen Computer das Datenverarbeitungsverfahren nach einem der Ansprüche 1 bis 2 ausführen.

**Claims**

1. Method for processing data conveyed by a composite signal comprising a first and a second data signal, said data being cut up into data blocks (B, B') of fixed

size ($P_0$) comprising a header field ($C_2$), said method comprising a step of identifying one of said data signals by applying a cyclic autocorrelation function of parameter k of fixed value, **characterized in that** the value of the parameter k is dependent on a ratio between the size ($P_0$) of the data blocks and a predetermined size ($L_0$) of the header field of the data blocks (B) of the first data signal, **in that** the cyclic autocorrelation function is applied to the second data signal of which the size ($L_1$) of the header field of the data blocks is distinct from said predetermined size ($L_0$) of the header field, the value of the parameter k and the size of the data blocks being unchanged, **and in that** the second data signal is identified if the application of the cyclic autocorrelation function gives a non-zero result.

2. Processing method according to Claim 1, **in which** the method comprises, for said identified data signal, a step of deleting said header field ($C_2$).

3. Device for processing data conveyed by a composite signal comprising a first and a second data signal, said data being cut up into data blocks of fixed size comprising a header field, said device comprising a means for applying a cyclic autocorrelation function of parameter k of fixed value, **characterized in that** the value of the parameter k is dependent on a ratio between the size of the data blocks and a predetermined size of the header field of the data blocks of the first data signal, **in that** said applying means are adapted to apply said cyclic autocorrelation function to the second data signal of which the size of the header field of the data blocks is distinct from said predetermined size of the header field, the value of the parameter k and the size of the data blocks being unchanged, **and in that** the second data signal is identified if the application of the cyclic autocorrelation function gives a non-zero result.

4. Processing device according to Claim 3, in which the device comprises means for deleting said header field in the identified data signal.

5. System comprising at least one device for processing data in accordance with one of Claims 3 to 4, and at least one device for sending a composite signal comprising a first and a second data signal, said data being cut up into data blocks of fixed size comprising a header field of predetermined size, said data signals being sent destined for at least one data processing device in accordance with one of Claims 3 to 4, designed to apply a cyclic autocorrelation function of parameter k of fixed value making it possible to identify the first and second data signals, **characterized in that** the value of the parameter k is dependent on a ratio between the size of said data blocks and the predetermined size of the header field, **and in that** said sending device comprises means for modifying the size of the header field of said data blocks before sending one of said data signals, the value of the parameter k and the size of said data blocks remaining unchanged.

6. Computer program product downloadable from a communication network and/or recorded on a medium readable by computer and/or executable by a processor, **characterized in that** it comprises program code instructions for the implementation of the method for processing data according to either of Claims 1 to 2 when said program is executed by a computer.

Fig. 1A

Fig. 1B

Fig. 2A

Fig. 2B

**Fig. 3**

-E1-

-E2-

PHE

**Fig. 4**

PHT

-F1-

-F2-

-F3-

-F4-

-20-    -23-

-21-    -24-

-22-    -25-

$M_i / M'_i$

**Fig. 6**

CP

-$A_1$-

-$A_2$-

-$A_K$-

-$A'_1$-

-$A'_2$-

-$A'_{N-1}$-

-$A'_N$-

**Fig. 7**

Fig. 5A

Fig. 5B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007042424 A2

**Littérature non-brevet citée dans la description**

- **BÖICSKEI et al.** Blind Channel Identification and Equalization in OFDM-Based Multiantenna Systems. *IEEE Transactions on Signal Processing,* Janvier 2002, vol. 50 (1